# EUROPEAN PATENT SPECIFICATION

(11) **EP 0 675 928 B1**
(45) Date of publication and mention of the grant of the patent: **12.02.1997**
(21) Application number: 94903372.4
(22) Date of filing: 07.12.1993
(51) Int. Cl.: C09D 127/12, B05D 7/00

(54) **COATING COMPOSITION FOR NON-STICK SUBSTRATES**
BESCHICHTUNGSZUSAMMENSETZUNGEN FÜR NICHTKLEBENDE OBERFLÄCHEN
COMPOSITION DE REVETEMENT POUR SUBSTRATS ANTIADHESIFS

(30) Priority: 23.12.1992 US 995758; 03.11.1993 US 146811
(43) Date of publication of application: 11.10.1995
(73) Proprietor: E.I. DU PONT DE NEMOURS AND COMPANY, Wilmington Delaware 19898 (US)
(72) Inventor: THOMAS, Philippe, Andre, Fernand, Germain, B-1357 Hélecine (BE)
(74) Representative: Abitz, Walter, Dr.-Ing.
(86) International application number: US9311635
(87) International publication number: WO9414904

(56) References cited:
- WO-A-92/10549
- US-A- 3 661 831

## Description

### CROSS REFERENCE TO RELATED APPLICATION

This is a continuation-in-part of application Serial No. 07/995,758 filed December 23, 1992.

### BACKGROUND OF THE INVENTION

This invention relates to non-stick coating systems that can be applied by roller coating to smooth substrates. More particularly, it relates to aqueous primer coating compositions, two-layer and at least three-layer coating systems using such compositions as primers, which permit deep drawing of the coated substrates.

Generally in the art a metal substrate is roughened by some means before the first layer of coating is applied so that mechanical bonding will assist chemical adhesive means in holding the coating onto the substrate. Typical roughening means include acid etching, sand-blasting, grit-blasting, and baking a rough layer of glass, ceramic or enamel frit onto the substrate. The problem of adhesion of non-stick coatings to substrates is exacerbated by the nature of the coatings. If the coating is optimized for release to prevent food particles from sticking to it, for easy clean-up after cooking or durability, or to facilitate low friction sliding contact, almost by definition there will be difficulties in making it adhere well to the substrate.

The substrate can be metal, often aluminum or stainless steel used for cookware or industrial applications, or it could be used for an industrial article such as a saw made of carbon steel. Whatever the substrate or the application, if it is necessary to roughen the substrate to make the coating adhere, that at least adds cost and can cause other difficulties including creating a rough profile which can protrude or telegraph through the coating. This is especially undesirable when smoothness is sought, such as for saws and steam irons. The environmental cost of disposing of etchant materials can be significant.

Efforts in the past to provide non-stick roller coatings for smooth substrates include two PCT patent publications of 25 June 1992, WO92/10309 on "Non-stick Coating System With PTFE and PFA or FEP For Concentration Gradient" and WO92/10549 on "Non-Stick Coating System With PTFE Of Different Melt Viscosities For Concentration Gradient", both in the name of H. P. Tannenbaum. Perfluoropolymers such as polytetrafluoroethylene (PTFE) of two different melt viscosities, or PTFE plus a copolymer of tetrafluoroethylene with hexafluoropropylene (FEP) or with perfluoroalkylvinylether (PFA), are used with a binder of polyamide imide or polyether sulfone.

Optimum results for roller coating require further developments.

### SUMMARY OF THE INVENTION

The present invention provides an aqueous coating composition comprising perfluorocarbon resin and a binder comprising polyamic acid and polyphenylene sulfide resin,
wherein said perfluorocarbon resin comprises two different perfluorocarbon resins, the first having a melt viscosity of at least 10⁵ Pa Sec and the second having a melt viscosity in the range of 10² to 10⁷ Pa Sec, with the melt viscosity of the first being at least 10² Pa Sec higher than that of the second, the weight proportions being in the range of 50 to 85% of the first such resin and 15 - 50% of the second such resin,
the ratio of the polyamic acid to polyphenylene sulfide being such that, in a coating made by curing said coating compositions, the weight ratio of the resulting polyamide imide resin to polyphenylene sulfide is in the range of 3:1 to 1:3, preferably in the range of 1.25:1 to 1:1.25, and
wherein the weight ratio in the cured coating of fluoropolymer to binder is in the range of 2:1 to 1:1.

In certain of its embodiments, the invention provides a two-layer coating system on a substrate with the coating of the invention as the primer, or a coating system with three or more layers with such a primer and with an intermediate coating which is the cured product of an aqueous coating composition comprising polyphenylene sulfide and polytetrafluoroethylene in weight ratio in the range of 0.5 to 2.0:6.

In either type of coating system, the topcoat comprises polytetrafluoroethylene, mica and decomposable polymer.

### DETAILED DESCRIPTION OF THE PREFERRED EMBODIMENTS

The present invention permits not only lower cost by avoiding the roughening of the substrate but also smoother coated surfaces which can be advantageous for release on cookware, and for the gliding effect on steam iron sole plates. Also it can allow application of dispersion PTFE coatings by roller coating techniques on smooth substrates.

Various embodiments of the invention involve using at least two PTFE resins having different melt viscosities in a primer. One pairs of resins has relatively high and low melt viscosity resins. Another has relatively low and lower still melt viscosity resin. For the lower of the two melt viscosity resins, copolymers of tetrafluoroethylene with fluorinated ethylene-propylene (FEP) or with perfluoro alkyl vinyl ether (PFA) can be used.

The adhesion of high melt viscosity fluoropolymer coatings to all types of metal substrates, particularly to smooth metal, can be significantly improved through chemically induced stratification or formation of a concentration gradient in the primer, and that can be obtained with the present invention.

Addition of perfluorocarbon polymer having a low melt viscosity (MV) in the range of 10³ - 10⁸ poise (10² - 10⁷ Pa Sec) and a polymeric binder including both polyamide-imide and polyphenylene sulfide, imparts a synergistic effect in which the fluoropolymer stratifies away from the substrate interface allowing the polymeric binder to obtain a higher concentration and degree of cure at the substrate interface resulting in improved adhesion. The required cure temperature to achieve this stratification can be modified by the choice of fluoropolymer.

Similar effects can be achieved using a low MV (at least 10⁶ poise or 10⁵ Pa Sec) PTFE with a lower still MV (10³ to 10⁵ poise or 10² to 10⁴ M Pa Sec) PTFE. To obtain concentration gradients of different polymers between the top and bottom of the coating, it is desirable to have a difference of at least 10² poise in melt viscosities of the two PTFE'S.

Melt viscosity of perfluoropolymers can be determined by known technique such as that in U.S. Patent 4,636,549 - Gangal et al (1987). See Col. 4, lines 25-63.

With use of the coatings of the invention on smooth substrates, treated only by washing to remove grease and any other contaminants which might interfere with adhesion, coating systems of the invention give good food release and good resistance to usual durability tests, generally described in U.S. patent 4,252,859, -- Concannon and Vary (1981) col. 2, lines 14-24.

Typical prior art preparation of surfaces to enhance adhesion of a release coating has involved etching or sand or grit blasting to develop a surface profile. The roughness profile is measured in average microinches using a model RT 60 surface roughness tester made by Alpa Co. of Milan, Italy. The profile on typical rolled aluminum after washing to remove grease and contaminants is 16-24 microinches (0.4 - 0.6 µm). The profile on steel varies more widely but is typically less than 50 microinches (1.3 µm). On both steel and aluminum, before a release coating is applied to profile typically is increased to over 100 micro inches (2.5 µm), preferably for aluminum for some uses to 180-220 micro inches (4.6 - 5.6 µm). Thus, the present invention is particularly useful with steel or aluminum substrates having a profile of less than 100, preferably less than 50 micro inches (less than 2.5 µm, preferably less than 1.3 µm).

The primers of the invention can also be used on substrates roughened in various ways known in the art to make coating systems even better than without such primers. This can combine improved chemical adhesion with mechanical effects to produce products that may be superior.

In the following examples, the polyamide imide, colloidal silica and dispersions are known in the art and preferably are those of U.S. Patents 4,031,286 - Seymus (1977) and 4,049,863 - Vassiliou.

The following examples provide improved adhesion. The fluoropolymers are provided as 60% dispersions in water. As usual, the solids content of dispersions is indicated in the tables. The compositions were blended by techniques normal in the art and then applied to a smooth, degreased aluminum substrate by roller coating.

An acrylic polyelectrolyte, such as Rohm and Haas Acrysol RM 5, is used to adjust the viscosity of the coating composition for roller coating application.

The following coating compositions are applied by techniques known in the art, preferably by roller coating on circular discs or even by reverse roller coating. Then separate layers are applied wet-on-wet with minimal drying and no curing between coats, then the coated system is cured such as at about 430°C for at least one minute. Then the two-layer system can be readily stamped, pressed or drawn into a frypan with a draw ratio of depth to diameter of up to about 0.2:1. The three-layer system can be readily deep drawn into a casserole with a draw ratio of depth to diameter of about 1:1 or for an increase in area by stretching up to 30% of the diameter of the disc.

Numerous experiments have shown the ranges of ratios of perfluoropolymer to binder and of the ingredients in the binder are needed for optimum performance in terms of scratch resistance, cross hatch, finger nail adhesion, flexibility around a conical mandrel, and non-stick.

### EXAMPLES

Example 1: - Two Coat System - PPS/PAI/PTFE/FEP PRIMER - used with PTFE Topcoat of Example 3

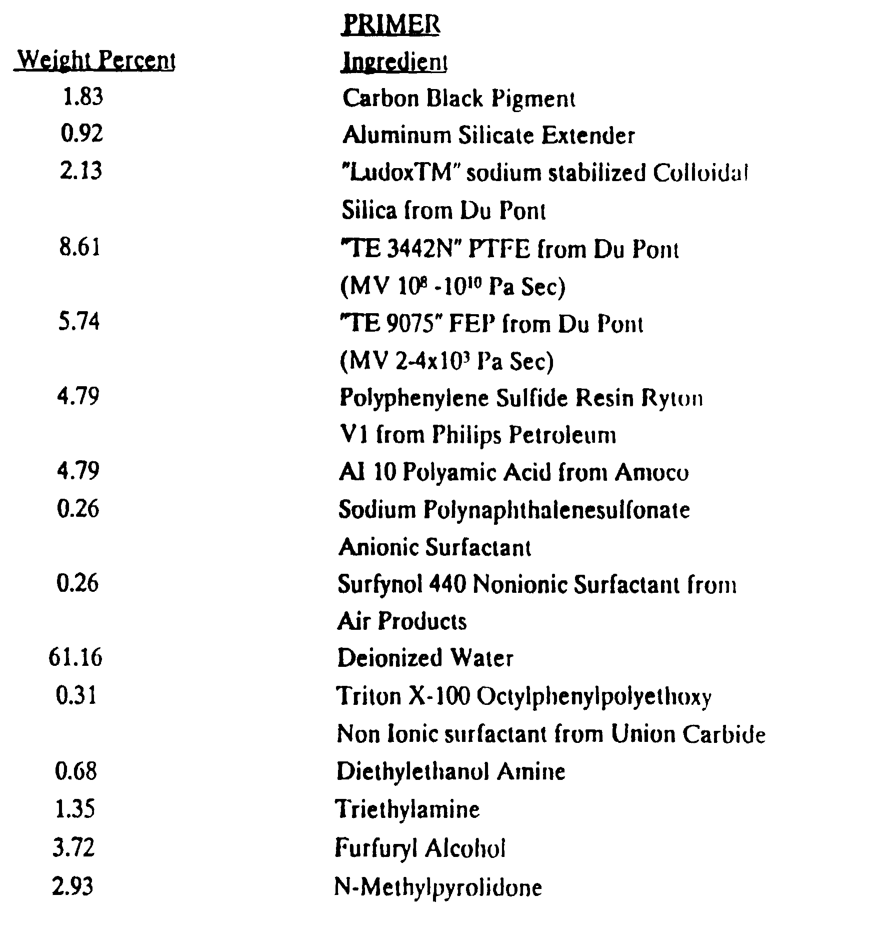

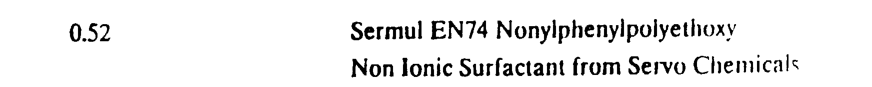

### Example 2 - Three Coat System -

The primer of example 1 is used with the intermediate of this example 2 and the topcoat of example 3 to give a three-layer system.

The resin composition of the intermediate is PPS, plus PTFE plus Acrysol RM5.

| INTERMEDIATE | |
|---|---|
| Weight Percent | Ingredients |
| 7.53 | Titanium dioxyde |
| 2.74 | Carbon black pigment |
| 1.37 | Aluminum Silicate extender |
| 4.44 | Barium-Sulfate extender |
| 28.38 | "TE 3442N" PTFE from Du Pont |
| 4.44 | Polyphenylene Sulfide resin Ryton V1 from Philips Petroleum |
| 0.44 | Sodium Polynaphthalenesulfonate surfactant |
| 0.35 | Surfynol 440 non-ionic surfactant from Air Product |
| 0.89 | Diethyleneglycolmonobutylether |
| 42.32 | Water |
| 2.40 | Triethanolamine |
| 0.89 | Triton X 100 Non-ionic surfactant from Union Carbide |
| 2.11 | Acrysol RM5 Acrylic thickening agent from Rohm and Haas |
| 1.70 | SERMUL EN74 Nonylphenylpolyethoxy Non-ionic surfactant from SERVO CHEMICALS |

### Example 3 - Topcoat

The resin composition of the topcoat is PTFE plus Acrysol RM5.

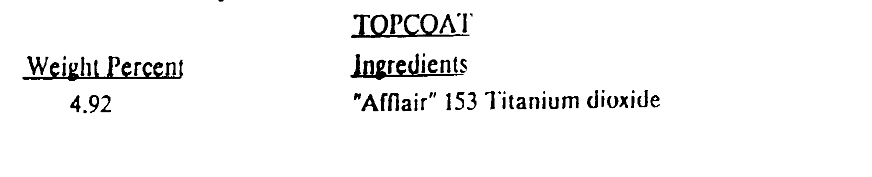

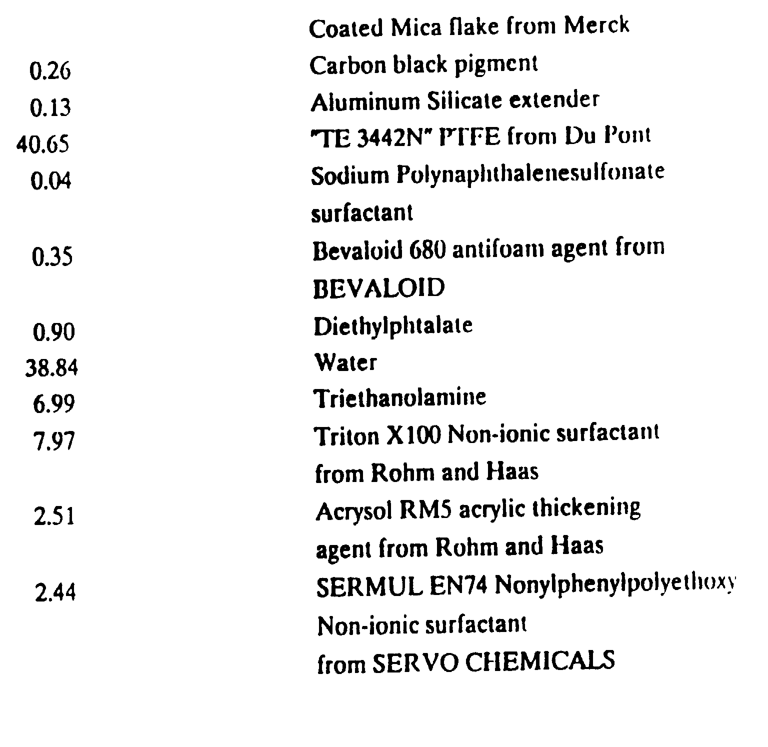

## Claims

1. An aqueous coating composition comprising perfluorocarbon resin and a binder comprising polyamic acid and polyphenylene sulfide resin,
wherein said perfluorocarbon resin comprises two different perfluorocarbon resins, the first having a melt viscosity of at least 10⁵ Pa Sec and the second having a melt viscosity in the range of 10² to 10⁷ Pa Sec, with the melt viscosity of the first being at least 10² Pa Sec higher than that of the second, the weight proportions being in the range of 50 to 85% of the first such resin and 15-50% of the second such resin,
the ratio of the polyamic acid to polyphenylene sulfide being such that, in a coating made by curing said coating composition, the weight ratio of the resulting polyamide imide resin to polyphenylene sulfide is in the range of 3:1 to 1:3, and
wherein the weight ratio in the cured coating of fluoropolymer to binder is in the range of 2:1 to 1:1.

2. The coating composition of claim 1 wherein the melt viscosity of said first resin is at least 10¹⁰ Pa Sec and the melt viscosity of said second resin is in the range of 10³ - 10⁴ Pa Sec.

3. The coating composition of claim 1 wherein the selected resin is a homopolymer of tetrafluoroethylene.

4. The coating composition of claim 1 wherein the selected resin is a copolymer of hexafluoropropylene and tetrafluoroethylene.

5. The coating composition of claim 1 wherein the selected resin is a copolymer of perfluoroalkylvinylether and tetrafluoroethyelene.

6. The coating composition of claim 1 wherein the weight ratio of fluoropolymer to binder is in the range of 1.75:1 to 1.25:1.

7. A coated substrate wherein the coating comprises a two-layer coating system including a primer applied to the substrate and a topcoat applied to the primer,
said primer being the cured product of the coating composition of claim 1,
said topcoat comprising polytetrafluoroethylene, mica and decomposable polymer.

8. A coated substrate wherein the coating system comprises at least three layers, including a primer applied to the substrate, at least one intermediate coat applied to the primer, and a topcoat applietl to an intermediate coat,
said primer being the cured product of the coating composition of claim 1,
said intermediate being the cured product of an aqueous coating composition comprising polyphenylenesulfide and polytetrafluoroethylene in weight ratio in the range of 0.5 - 2.0:6,
said topcoat being the cured product of a coating composition comprising fluoropolymer, mica and decomposable polymer wherein the weight ratio of fluoropolymer to decomposable polymer is in the range of 16:0.5 to 16:1.5.

9. The coated substrate of claim 8 which has been deep drawn with a draw ratio of depth to diameter of 1:1, wherein the weight ratio in the primer of polyamide imide to polyphenylene sulfide is in the range of 3:1 to 1:3.

10. The coated substrate of either claim 7 or claim 8 wherein the coating comprises a coating composition of claim 1 and the substrate is free of contaminants that would prevent adhesion of the coating.

11. The coated substrate of claim 7 or claim 8 wherein the substrate before coating has an average surface roughness profile less than 1.3 microns.

12. The coated substrate of claim 7 or claim 8 wherein the primer coating resulting from aqueous dispersion is not uniform for an composition throughout its thickness but has a lower concentration of polytetrafluoroethylene at the interface with the substrate than at the opposite interface and has a higher concentration of polyamide, polyphenylene mixed binder resins at the interface with the substrate than at the opposite interface.

13. A process of coating a substrate of claim 7 or claim 8 wherein the coatings layers are applied to the substrate in the form of a disc without completely drying one coating before applying the next, and then the coating system is cured by heating of at least 400°C and then the disc is formed by deep drawing with a draw ratio of depth to diameter of 1:1.

## Patentansprüche

1. Wäßrige Beschichtungszusammensetzung, umfassend Perfluorkohlenstoffharz und ein Bindemittel, umfassend Polyamidsäure und Polyphenylensulfidharz,
worin das Perfluorkohlenstoffharz zwei unterschiedliche Perfluorkohlenstoffharze umfaßt, wobei das erste eine Schmelzviskosität von wenigstens 10⁵ Pa sec und das zweite eine Schmelzviskosität im Bereich von 10² bis 10⁷ Pa sec aufweist, wobei die Schmelzviskosität des ersten wenigstens 10² Pa sec höher ist als diejenige des zweiten, die Gewichtsanteile im Bereich von 50 bis 85 % des ersten derartigen Harzes liegen und im Bereich von 15-50 % des zweiten derartigen Harzes liegen,
das Verhältnis der Polyamidsäure zudem Polyphenylensulfid so ist, daß in einer Beschichtung, hergestellt durch Härten der Beschichtungszusammensetzung, das Gewichtsverhältnis des resultierenden Polyamidimidharzes zu dem Polyphenylensulfid im Bereich von 3:1 bis 1:3 liegt, und worin das Gewichtsverhältnis von Fluorpolymer zu Bindemittel in der gehärteten Beschichtung im Bereich von 2:1 bis 1:1 liegt.

2. Beschichtungszusammensetzung nach Anspruch 1, worin die Schmelzviskosität des ersten Harzes wenigstens 10¹⁰ Pa sec beträgt und die Schmelzviskosität des zweiten Harzes im Bereich von 10³ bis 10⁴ Pa sec liegt.

3. Beschichtungszusammensetzung nach Anspruch 1, worin das ausgewählte Harz ein Homopolymer von Tetrafluorethylen ist.

4. Beschichtungszusammensetzung nach Anspruch 1, worin das ausgewählte Harz ein Copolymer aus Hexafluorpropylen und Tetrafluorethylen ist.

5. Beschichtungszusammensetzung nach Anspruch 1, worin das ausgewählte Harz ein Copolymer aus Perfluoralkylvinylether und Tetrafluorethylen ist.

6. Beschichtungszusammensetzung nach Anspruch 1, worin das Gewichtsverhältnis von Fluorpolymer zu Bindemittel im Bereich von 1,75:1 bis 1,25:1 liegt.

7. Beschichtetes Substrat, worin die Beschichtung ein zweischichtiges Beschichtungssystem umfaßt, welches einen auf das Substrat aufgebrachten Primer und eine auf den Primer aufgebrachte Deckschicht einschließt, wobei der Primer das gehärtete Produkt der Beschichtungszusammensetzung nach Anspruch 1 ist,
die Deckschicht Polytetrafluorethylen, Glimmer und ein abbaubares Polymer umfaßt.

8. Beschichtetes Substrat, worin das Beschichtungssystem wenigstens drei Schichten umfaßt, die einen auf das Substrat aufgebrachten Primer, wenigstens eine auf den Primer aufgebrachte Zwischenschicht und eine auf die Zwischenschicht aufgebrachte Deckschicht einschließt, wobei der Primer das gehärtete Produkt der Beschichtungszusammensetzung nach Anspruch 1 ist,
die Zwischenschicht das gehärtete Produkt einer wäßrigen Beschichtungszusammensetzung ist, umfassend Polyphenylensulfid und Polytetrafluorethylen in einem Gewichtsverhältnis im Bereich von 0,5 bis 2,0:6, die Deckschicht das gehärtete Produkt einer Beschichtungszusammensetzung ist, umfassend Fluorpolymer, Glimmer und abbaubares Polymer, worin das Gewichtsverhältnis von Fluorpolymer zu abbaubarem Polymer im Bereich von 16:0,5 bis 16:1,5 liegt.

9. Beschichtetes Substrat nach Anspruch 8, welches mit einem Streckverhältnis von Tiefe zu Durchmesser von 1:1 tiefgezogen worden ist, worin das Gewichtsverhältnis von Polyamidimid zu Polyphenylensulfid in dem Primer im Bereich von 3:1 zu 1:3 liegt.

10. Beschichtetes Substrat entweder nach Anspruch 7 oder Anspruch 8, worin die Beschichtung eine Beschichtungszusammensetzung nach Anspruch 1 umfaßt und das Substrat frei ist von Verunreinigungen, die eine Haftung der Beschichtung verhindern würden.

11. Beschichtetes Substrat nach Anspruch 7 oder Anspruch 8, worin das Substrat vor der Beschichtung ein durchschnittliches Oberflächenrauhigkeitsprofil von weniger als 1,3 µm besitzt.

12. Beschichtetes Substrat nach Anspruch 7 oder Anspruch 8, worin die Primerbeschichtung, die sich aus der wäßrigen Dispersion ergibt, für eine Zusammensetzung in ihrer Dicke nicht überall gleichmäßig ist, sondern eine niedrigere Konzentration an Tetrafluorethylen an der Grenzfläche zu dem Substrat als an der entgegengesetzten Grenzfläche und eine höhere Konzentration an Polyamid-Polyphenylen-Bindeharzgemischen an der Grenzfläche zu dem Substrat als an der entgegengesetzten Grenzfläche besitzt.

13. Verfahren zur Beschichtung eines Substrates nach Anspruch 7 oder Anspruch 8, bei dem die Schichten der Beschichtung auf das Substrat in Form einer Scheibe ohne vollständiges Trocknen einer Schicht vor dem Auftragender nächsten aufgebracht werden und anschließend das Beschichtungssystem unter Erhitzen auf wenigstens 400 °C gehärtet wird und die Scheibe anschließend durch Tiefziehen mit einem Streckverhältnis von Tiefe zu Durchmesser von 1:1 geformt wird.

## Revendications

1. Une composition de revêtement aqueuse comprenant une résine perfluorocarbonée et un liant comprenant un acide polyamique et une résine de sulfure de polyphénylène,
dans laquelle ladite résine perfluorocarbonée comprend deux résines perfluorocarbonées différentes, la première ayant une viscosité à l'état fondu d'au moins 10⁵ Pa.s et la seconde ayant une viscosité à l'état fondu comprise dans l'intervalle de 10² à 10⁷ Pa.s, la viscosité à l'état fondu de la première étant supérieure d'au moins 10² Pa.s à celle de la seconde, les proportions en poids se situant dans l'intervalle de 50 à 85 % de cette première résine et 15 à 50 % de cette seconde résine,
le rapport de l'acide polyamique au sulfure de polyphénylène étant telle que, dans un revêtement obtenu par durcissement de ladite composition de revêtement, le rapport en poids de la résine de polyamide-imide résultante au sulfure de polyphénylène se situe dans l'intervalle de 3:1 à 1:3, et
dans laquelle le rapport en poids du polymère fluoré au liant dans le revêtement durci se situe dans l'intervalle de 2:1 à 1:1.

2. La composition de revêtement de la revendication 1, dans laquelle la viscosité à l'état fondu de ladite première résine est d'au moins 10¹⁰ Pa.s et la viscosité à l'état fondu de ladite seconde résine se situe dans l'intervalle de 10³ à 10⁴ Pa.s.

3. La composition de revêtement de la revendication 1, dans laquelle la résine choisie est un homopolymère de tétrafluoréthylène.

4. La composition de revêtement de la revendication 1, dans laquelle la résine choisie est un copolymère d'hexafluoropropylène et de tétrafluoréthylène.

5. La composition de revêtement de la revendication 1, dans laquelle la résine choisie est un copolymère de perfluoro(éther d'alkyle et de vinyle) et de tétrafluoréthylène.

6. La composition de revêtement de la revendication 1, dans laquelle le rapport en poids du polymère fluoré au liant se situe dans l'intervalle de 1,75:1 à 1,25:1.

7. Un substrat revêtu dans lequel le revêtement consiste en un système de revêtement à deux couches comprenant une couche primaire appliquée au substrat et une couche supérieure appliquée à la couche primaire,
ladite couche primaire étant le produit durci de la composition de revêtement de la revendication 1,
ladite couche supérieure comprenant du polytétrafluoréthylène, du mica et un polymère décomposable.

8. Un substrat revêtu dans lequel le système de revêtement comprend au moins trois couches, comprenant une couche primaire appliquée au substrat, au moins une couche intermédiaire appliquée à la couche primaire et une couche supérieure appliquée à une couche intermédiaire,
ladite couche primaire étant le produit durci de la composition de revêtement de la revendication 1,
ladite couche intermédiaire étant le produit durci d'une composition de revêtement aqueuse comprenant du sulfure de polyphénylène et du polytétrafluoréthylène en un rapport en poids de 0,5 à 2,0:6,
ladite couche supérieure étant le produit durci d'une composition de revêtement comprenant un polymère fluoré, du mica et un polymère décomposable dans laquelle le rapport en poids du polymère fluoré au polymère décomposable se situe dans l'intervalle de 16:0,5 à 16:1,5.

9. Le substrat revêtu de la revendication 8, qui a été soumis à un emboutissage profond avec un rapport d'étirage de la profondeur au diamètre de 1:1, dans lequel le rapport en poids du polyamide-imide au sulfure de polyphénylène dans la couche primaire se situe dans l'intervalle de 3:1 à 1:3.

10. Le substrat revêtu de la revendication 7 ou de la revendication 8, dans lequel le revêtement comprend une composition de revêtement de la revendication 1 et le substrat est exempt d'impuretés qui empêcheraient l'adhérence du revêtement.

11. Le substrat revêtu de la revendication 7 ou de la revendication 8, dans lequel le substrat, avant d'être revêtu, a un profil moyen de rugosité superficielle inférieur à 1,3 micromètre.

12. Le substrat revêtu de la revendication 7 ou de la revendication 8, dans lequel la couche primaire formée à partir d'une dispersion aqueuse n'a pas une composition uniforme à travers toute son épaisseur, mais a une plus faible concentration en polytétrafluoréthylène à l'interface avec le substrat qu'à l'interface opposée et a une plus forte concentration en résines liantes polyamide et polyphénylène mélangées à l'interface avec le substrat qu'à l'interface opposée.

13. Un procédé de revêtement d'un substrat de la revendication 7 ou de la revendication 8, dans lequel les couches de revêtement sont appliquées au substrat sous la forme d'un disque sans sécher complètement une couche avant d'appliquer la suivante, puis le système de revêtement est durci par chauffage à une température d'au moins 400°C, puis le disque est formé par emboutissage profond avec un rapport d'étirage de la profondeur au diamètre de 1:1.
